# EUROPÄISCHE PATENTANMELDUNG

(11) **EP 1 764 808 A1**
(43) Veröffentlichungstag der Anmeldung: **21.03.2007**
(21) Anmeldenummer: 05020123.5
(22) Anmeldetag: 15.09.2005
(51) Int. Cl.: H01F 41/02, H02K 15/02

(54) **Verfahren und Vorrichtung zur Herstellung eines Blechpacketes**

(71) Anmelder: SIEMENS AKTIENGESELLSCHAFT, 80333 München (DE)
(72) Erfinder: Friese, Michael Dr., 99100 Bienstädt (DE); Gruhle, Achim, 99100 Bienstädt (DE)

(57) **Zusammenfassung**

Die Erfindung betrifft ein Verfahren und eine Vorrichtung zur Herstellung eines Blechpaketes (6) für eine dynamoelektrische Maschine (1). Das Verfahren und die Vorrichtung zeichnen sich durch ein gleichzeitiges Heben und Ablegen der Segmentbleche (2) aus. Das Heben und Ablegen der Segmentbleche (2) erfolgt durch eine Greifvorrichtung (13), wobei die Kraftwirkung auf die Segmentbleche (2) durch magnetische Felder erfolgt.

## Beschreibung

Die Erfindung betrifft ein Verfahren sowie eine Automatisierungsvorrichtung zur Herstellung eines Blechpaketes für eine dynamoelektrische Maschine.

Unter einer dynamoelektrischen Maschine im Sinne der vorliegenden Anmeldung wird jeder Energiewandler verstanden, der elektrische in mechanische Energie oder mechanische in elektrische Energie umwandelt. Im vorliegenden Fall ist unter einer dynamoelektrischen Maschine ein Generator zur elektrischen Energieversorgung zu verstehen.

Ein Drehstromgenerator als Ausführungsform einer dynamoelektrischen Maschine besteht u. a. aus elektrisch aktiven Teilen, zu denen ein Ständer und ein drehbar gelagerter Läufer gehören. Der Ständer besteht aus versetzt aufeinander geschichteten Segmentblechen, die auch als Eisenbleche bezeichnet werden können. Die Segmentbleche sind mit Nuten zur Aufnahme von Wicklungen versehen. Eine hohe Magnetisierbarkeit und kleine Hysterese- oder Wirbelstromverluste der Segmentbleche sind erforderlich. Durch dünne Papier-, Lack- oder Oxidschichten werden die Segmentbleche gegeneinander isoliert. Ein komplett ausgebildeter Ständer oder Läufer besteht aus vielen Segmentblechen. Das Gebilde der aufeinander gestapelten Segmentbleche in der dynamoelektrischen Maschine wird auch als Blechpaket bezeichnet.

Die Segmentbleche werden einzeln per Hand oder mit Hilfe einer Maschine aufeinander gestapelt. Das Stapeln der Segmentbleche per Hand zu einem Blechpaket ist langsam und aufwändig. Mit einer Maschine kann das Stapeln schneller ausgeführt werden, dafür sind der Kauf und die Unterhaltung aber kostspielig. Wenn die Maschine nicht genau eingestellt und/oder justiert ist, können die Segmentbleche verklemmt oder beschädigt werden. Dadurch würden zusätzliche Kosten entstehen.

Die JP-A-579 978 (Fujitsu) offenbart ein Verfahren zur Herstellung eines Blechpaketes, das zur Verwendung als ein Teil eines verzahnten Blechpaketes geeignet ist, um als Kern in einer elektromagnetischen Vorrichtung verwendet zu werden.

In der EP 0 843 881 B1 wird ein Verfahren zum Schichten von Segmentblechen zu einem Blechpaket, insbesondere für die Herstellung von kleineren Transformatoren-Kernen beschrieben. Danach wird immer jeweils ein einzelnes Segmentblech maschinell lagerichtig abgelegt und in der abgelegten Position nieder gehalten. Anschließend wird Klebstoff auf die Oberfläche des abgelegten Segmentbleches aufgetragen und ein weiteres Segmentblech auf die mit Klebstoff versehene Oberfläche abgelegt. Der Vorgang wird solange wiederholt, bis ein Blechpaket aufgebaut ist. Das Niederhalten bewirkt einerseits, dass das zuletzt abgelegte Blech gegen das vorhergehende Blech gepresst wird und dass der dazwischen liegende Klebstoff richtig verkeilt wird. Andererseits wird aber dabei auch verhindert, dass sich beim Auftragen der neuen Klebstoffschicht das abgelegte Segmentblech verschieben kann.

Eine Vorrichtung und ein Verfahren zur Herstellung von Blechpaketen werden auch in der DE 100 40 978 A1 beschrieben. Danach wird eine klein dimensionierte Maschine zur Herstellung von Blechpaketen eingesetzt, die sowohl die einzelnen Segmentbleche herstellt als auch verbindet. Indem sie die Segmentbleche zunächst aus Blech ausschneidet, die ausgeschnittenen Segmentbleche zueinander ausgerichtet stapelt, so dass ein lose aufgebautes Blechpaket vorliegt, und sie miteinander verschweißt, um beispielsweise ein Statorblechpaket oder ein Rotorblechpaket auszubilden. Ein Verkleben der Segmentbleche ist in dieser Schrift nicht erwähnt.

Ein Verfahren und eine Vorrichtung zum automatischen Bilden von ausgerichteten Blechplattenpaketen zur Herstellung von Ankern elektrischer Maschinen oder dgl. ist auch in der DE 694 01 541 T2 offenbart.

Ebenso sind in der DE 692 11 411 T2 eine Vorrichtung und ein Verfahren, um gestapelte Segmentbleche einer dynamoelektrischen Maschine auszurichten, beschrieben.

Ab einer bestimmten Größe der Segmentbleche müssen diese von Hand in einer Vorrichtung angeordnet werden. Die Segmentbleche werden dabei von einem Mitarbeiter aus einem Vorrat einzeln herausgenommen und in einer Aufnahmevorrichtung einzeln abgelegt, wodurch ein erster Arbeitsschritt abgeschlossen wird. In einem zweiten Arbeitsschritt wird ein nächstes Segmentblech aus dem Vorrat genommen und neben das schon in der Aufnahmevorrichtung abgelegte Segmentblech angelegt. Dieser Vorgang ist, wie bereits erwähnt, sehr zeitaufwändig. Die Fertigungszeiten von solchen Blechpaketen sind dadurch vergleichsweise lang.

Wesentliche Faktoren die die Herstellung eines Blechpaketes für eine dynamoelektrische Maschine beeinflussen sind u. a.:
- das Greifen der gleichen Blechzahl nach einem abgeschlossenen Verfahrensschritt vom Vorratsbehälter,
- die Bewegung von zusammengefassten Segmentblechen ohne Verschiebung gegeneinander,
- das exakte Ablegen der zusammengefassten Segmentbleche auf eine Positioniereinrichtung.

Um mehrere Segmentbleche zeitgleich greifen und bewegen zu können, müssen diese form- oder kraftschlüssig miteinander verbunden sein. Die Formschlüssigkeit setzt einen vorgelagerten zusätzlichen Arbeitsschritt, in dem die Segmentbleche miteinander verklebt oder verschweißt werden, voraus.

Eine effektive Maßnahme zur Taktzeiterhöhung je Auflegen eines Segmentbleches ist ein gleichzeitiges Auflegen mehrerer loser Bleche. Es besteht die Gefahr, dass mehrere Bleche während eines Transportes nicht zugleich gegriffen werden können. Es ist möglich, dass sich die Bleche gegeneinander verschieben und dadurch nicht mehr genau positioniert abgelegt werden können.

Aufgabe der vorliegenden Erfindung ist es, ein Verfahren zur schnelleren Herstellung eines Blechpaketes für eine dynamoelektrische Maschine, insbesondere eine Maschine, deren Blechpaket in Umfangsrichtung aus mehreren Segmentblechen zusammengesetzt ist, anzugeben. Eine weitere Aufgabe der vorliegenden Erfindung ist es, eine Automatisierungsvorrichtung zur Herstellung eines Blechpaketes anzugeben, die sich durch eine schnelle Herstellbarkeit des Blechpaketes auszeichnet.

Die auf das Verfahren hin gerichtete Aufgabe wird gelöst durch ein Verfahren zur Herstellung eines Blechpaketes für eine dynamoelektrische Maschine, wobei das Blechpaket Segmentbleche umfasst, wobei in einem Vorratsbehälter übereinander gestapelte Segmentbleche vorhanden sind, umfassend folgende Schritte,
a) Führen einer magnetischen Greifvorrichtung an ein oberstes Segmentblech,
b) Kontaktieren des obersten Segmentbleches mit der Greifvorrichtung,
c) Heben des obersten und zumindest eines unter dem obersten Segmentblech liegenden zweiten Segmentbleches durch die magnetische Greifvorrichtung,
d) Ablegen des obersten und des zweiten Segmentbleches auf einer Positioniereinrichtung zum Aufbau eines Blechpaketes.

Der Vorteil der Erfindung ist u. a. darin zu sehen, dass nunmehr statt eines Segmentbleches, das momentan einzeln aus einem Vorrat genommen und jeweils einzeln abgelegt wird, zumindest zwei Segmentbleche genommen werden, die gleichzeitig miteinander bewegt werden können. Durch das Abheben, Bewegen und Ablegen der zumindest zwei Segmentbleche wird die Fertigungszeit für ein Blechpaket für eine dynamoelektrische Maschine zumindest halbiert.
Die Segmentbleche umfassen magnetisierbare Materialien.

Die Erfindung kann z.B. für die Herstellung von elektrischen Maschinen eingesetzt werden. Elektrische Maschinen sind z.B. Transformatoren, Generatoren oder ähnliche Maschinen. Ein wesentlicher Aspekt der Erfindung ist, dass eines oder mehrere Segmentbleche durch eine Kraftwirkung infolge magnetischer Felder bewegt werden kann. Das magnetische Feld kann z.B. durch Permanentmagnete oder durch elektrische Spulen erzeugt werden. Andere Möglichkeiten der Erzeugung des magnetischen Feldes sind denkbar.

Die Feldstärke des magnetischen Feldes und die daraus resultierende Kraftwirkung auf das oberste Segmentblech und auf das darunter liegende zweite Segmentblech müssen derart dimensioniert sein, dass genau zwei Segmentbleche infolge der Kraftwirkung gehoben werden können.

In einer vorteilhaften Weiterbildung der Erfindung wird im Schritt c) ein unter dem zweiten Segmentblech liegendes drittes Segmentblech gehoben und in Schritt d) abgelegt.

Durch diese Maßnahme werden gleichzeitig drei Segmentbleche angehoben und abgelegt. Dadurch verkürzt sich die Herstellungszeit des Blechpaketes weiter. Das magnetische Feld muss selbstverständlich derart dimensioniert werden, dass die Kraftwirkung genau drei Segmentbleche umfasst.

In einer weiteren vorteilhaften Weiterbildung wird im Schritt c) zumindest ein zusätzliches Segmentblech gehoben und im Schritt d) abgelegt. Vorteilhafterweise werden dadurch mehr als drei Segmentbleche gleichzeitig angehoben, was selbstverständlich zu einer weiteren Verkürzung der Herstellungszeit eines Blechpaketes führt. Das magnetische Feld muss hierbei derart dimensioniert werden, dass die Kraftwirkung infolge des magnetischen Feldes genau die zu bewegenden Segmentbleche umfasst.

In einer weiteren vorteilhaften Weiterbildung werden die Segmentbleche mit zumindest einer Bohrung versehen. Die Positioniereinrichtung weist hierbei zumindest einen Stift auf, wobei der Durchmesser des Stiftes in die Bohrung passt. Das oberste und zumindest zweite Segmentblech wird nach dem Schritt c) derart auf die Positioniereinrichtung abgelegt, dass der Stift in die Bohrung hineinragt und die Segmentbleche entlang des Stifts geführt werden. Durch das Führen des obersten und zweiten Segmentbleches entlang des Stiftes ist ein Verschieben der Segmentbleche während des Ablegens auf die Positioniereinrichtung zum Aufbau des Blechpaketes vermieden. Selbst wenn eine Kraft auf das Segmentblech wirkt, die dazu führt, dass das Segmentblech gegen ein darunter bzw. oben liegendes Segmentblech verschoben wird, ist diese Bewegung nahezu ausgeschlossen, da der Stift einer Bewegung des Segmentbleches entgegenwirkt.

Zweckdienlicherweise sollten die Segmentbleche zwei Löcher aufweisen, damit ein Drehen der Segmentbleche verhindert wird. Es sind aber auch mehr als zwei Löcher möglich.

In einer weiteren vorteilhaften Weiterbildung wird der Stift, sobald das oberste oder zumindest zweite Segmentblech abgelegt wird, in Richtung des wachsenden Blechpaketes bewegt.

Die Erfindung geht hierbei von dem Aspekt aus, dass durch das automatische Stapeln der Segmentbleche ein Blechpaket ständig anwächst. Wenn sich der Aufbau des Blechpaketes in einem Anfangsstadium befindet und der Stift der Gesamtlänge des fertigen Blechpaketes entspricht, so müssen die Bleche bei jedem Stapelvorgang die Gesamtlänge des Stiftes entlang gleiten. Dies wird durch die vorteilhafte Weiterbildung vermieden. Der Stift ragt beispielsweise einige Zentimeter aus einem bereits abgelegten Segmentblech hervor. Das nächste abzulegende Segmentblech bzw. die Segmentbleche müssen demzufolge lediglich die wenige Zentimeter hervorragende Stiftlänge entlang gleiten. Sobald die Segmentbleche abgelegt sind, wird der Stift beispielsweise um die Dicke der soeben abgelegten Segmentblechs angehoben. Die nächsten abzulegenden Segmentbleche hätten demnach den gleichen zu überwindenden Weg der Stifte zu absolvieren.

In einer vorteilhaften Weiterbildung wird das oberste Segmentblech im Vorratsbehälter zunächst ein wenig angehoben. Anschließend wird das angehobene oberste Segmentblech auf das untere, zumindest zweite Segmentblech passgenau abgelegt. Zu beachten ist hierbei, dass die äußere Form des Segmentbleches genau auf der äußeren Form des darunter liegenden Segmentblechs liegt. Die beiden Segmentbleche müssen passgenau übereinander liegen. In einem nächsten Schritt wird das oberste und das zumindest untere zweite Segmentblech gleichzeitig, wie im Verfahrensschritt c) beschrieben, bewegt.

Dadurch entsteht der Vorteil, dass die Segmentbleche im Vorratsbehälter nicht zwingend passgenau übereinander gestapelt werden müssen. Die Erfindung bietet eine Lösung an, wie nicht zwei passgenau übereinander gelegte Segmentbleche im Vorratsbehälter dennoch automatisiert dem Vorratsbehälter derart entnommen werden können, dass sie gleichzeitig auf die Positioniereinrichtung zum Aufbau des Blechpaketes abgelegt werden können.

Die auf die Automatisierungsvorrichtung hin gerichtete Aufgabe wird gelöst durch eine Automatisierungsvorrichtung zur Herstellung eines Blechpaketes für eine dynamoelektrische Maschine, wobei in einem Vorratsbehälter übereinander gestapelte Segmentbleche vorhanden sind, wobei die Automatisierungsvorrichtung eine Greifvorrichtung umfasst, die derart ausgebildet ist, dass ein oberstes und zumindest ein unter dem obersten Segmentblech liegendes zweites Segmentblech gleichzeitig bewegbar und auf einer Positioniereinrichtung ablegbar ist, wobei die Greifvorrichtung derart ausgebildet ist, dass das oberste und das zumindest unter dem obersten liegende zweite Segmentblech durch eine Kraftwirkung mittels magnetischer Felder gleichzeitig bewegbar sind. Die Vorteile entsprechen den wie beim Verfahren beschriebenen Vorteilen.

Insbesondere wird durch die Automatisierungsvorrichtung die Herstellungszeit eines Blechpaketes zumindest halbiert.

In einer vorteilhaften Weiterbildung werden drei oder mehr Segmentbleche durch die Greifvorrichtung bewegt. Dadurch verkürzt sich die Herstellung des Blechpaketes zunehmend.

In einer weiteren vorteilhaften Weiterbildung ist das magnetische Feld zu- und abschaltbar.

Dadurch kann die Greifvorrichtung ohne störende anfängliche Magnetkräfte genau an das oberste Segmentblech positioniert werden. Sobald die Greifvorrichtung genau an dem obersten Segmentblech anliegt wird das magnetische Feld zugeschaltet. Nachdem die Segmentbleche auf der Positioniereinrichtung abgelegt werden, wird das magnetische Feld abgeschaltet. Durch diese vergleichsweise einfache Maßnahme wird das Greifen der Segmentbleche erheblich erleichtert. Eine weitere Möglichkeit die Greifvorrichtung von dem Segmentblech zu lösen, wäre z. B. durch ein Kippen der Greifvorrichtung gegeben.

In einer weiteren vorteilhaften Weiterbildung weist die Greifvorrichtung zumindest drei Magnetköpfe zum Kontaktieren der Segmentbleche auf. Die geometrische Form der Magnetköpfe kann hierbei zweckdienlich an die Form der Segmentbleche angepasst werden. Die Form kann beispielsweise viereckig, dreieckig oder rund sein.

In einer weiteren vorteilhaften Weiterbildung weisen die Segmentbleche zumindest eine Bohrung und die Positioniereinrichtung zumindest einen Stift auf. Die auf die Positioniereinrichtung abgelegten Segmentbleche werden hierbei derart abgelegt, dass der Stift in die Bohrung hineinragt. Dadurch ist es möglich, dass die Segmentbleche ohne zu verschieben zu einem Blechpaket gestapelt werden können. Zweckdienlicherweise sollten hierbei zwei Löcher im Segmentblech und zwei Stifte berücksichtig werden.

In einer weiteren vorteilhaften Weiterbildung ist der Stift an einem Ende konisch ausgebildet. Dadurch wird das Ablegen des Segmentbleches auf die Positioniereinrichtung erheblich erleichtert. Wenn beispielsweise ein abzulegendes Segmentblech nicht genau über einem bereits abgelegten Segmentblech positioniert ist, wird durch den konisch ausgebildeten Stift das Segmentblech sozusagen an seine richtige Stelle geführt. Das abzulegende Segmentblech gleitet auf einer schiefen Ebene auf das bereits abgelegte Segmentblech derart hinab, dass es passgenau auf dem abgelegten Segmentblech liegt.

In einer weiteren vorteilhaften Weiterbildung wird die Positioniereinrichtung derart ausgebildet, dass der Stift bewegbar ist. Sobald ein Segmentblech abgelegt wird, würde das bereits abgelegte Segmentblech den Stift immer weiter zudecken. Daher wird vorgeschlagen, den Stift bewegbar auszubilden. Sobald ein Segmentblech abgelegt wird, wird der Stift um beispielsweise genau der Dicke des abgelegten Segmentbleches nach oben bewegt.

In einer weiteren vorteilhaften Weiterbildung werden Sensoren angeordnet, die derart ausgebildet sind, dass die Position der Greifvorrichtung und die Lage der Segmentbleche erfassbar sind. Wenn die Lage der Greifvorrichtung und die Lage der Segmentbleche erfassbar sind, können bei jedem Verfahrensschritt, insbesondere bei dem Verfahrensschritt b), c) und d), die Segmentbleche in dem Vorratsbehälter nicht zwingend an einem vorbestimmten Platz angeordnet werden. Mit anderen Worten, die Greifvorrichtung "sucht" das Segmentblech, greift es und bewegt es.

Ausführungsbeispiele der Erfindung werden nachfolgend unter Bezugnahme auf die Zeichnungen näher beschrieben. Dabei haben mit denselben Bezugszeichen versehene Komponenten die gleiche Funktionsweise.

Dabei zeigen:
- FIG 1: eine perspektivische Darstellung eines Stators einer dynamoelektrischen Maschine,
- FIG 2: eine Draufsicht auf ein Segmentblech,
- FIG 3: eine perspektivische Darstellung der Greif- und Positioniereinrichtung,
- FIG 4: eine schematische Darstellung einzelner Verfahrenschritte.

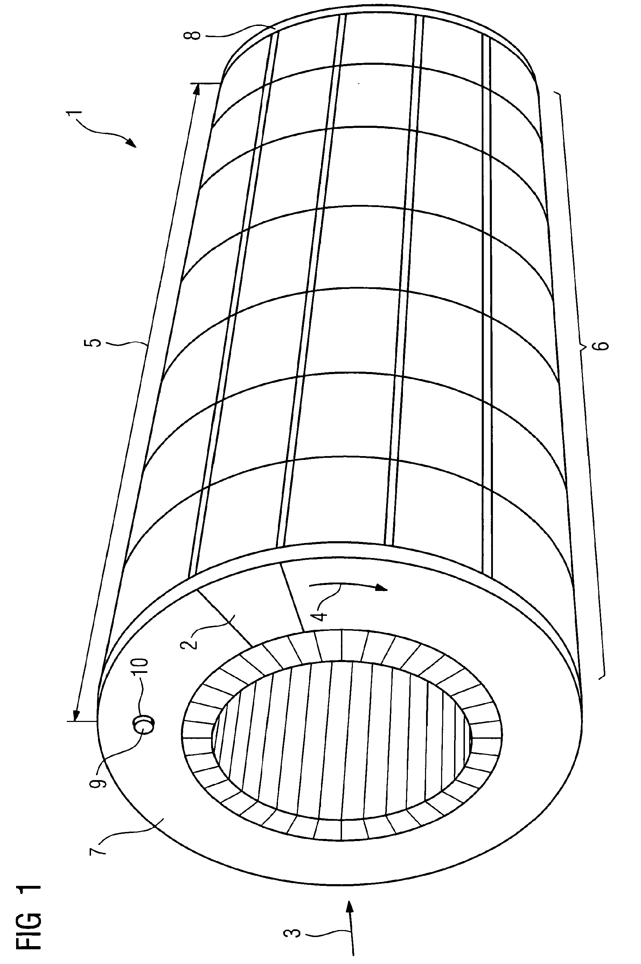

In FIG 1 ist eine perspektivische Darstellung eines Stators einer elektrischen Maschine 1 zu sehen. Die elektrische Maschine 1 ist um eine nicht näher dargestellte Rotationsachse rotationssymmetrisch aufgebaut. Ein elektrischer Generator oder Transformator als Ausführungsform einer elektrischen Maschine 1 besteht aus physikalischen Gründen aus einer Vielzahl von Segmentblechen 2. In der FIG 1 ist der Übersichtlichkeit wegen lediglich ein Segmentblech 2 dargestellt. Die Segmentbleche 2 werden in einer Ausdehnungsrichtung 3 aneinander gestapelt und in einer Umfangsrichtung 4 nebeneinander angelegt. Im fertigen Zustand wird dann ein komplettes Blechpaket 6 über eine Länge 5 ausgebildet. Die Blechpakete 6 für Generatoren zur elektrischen Energieversorgung bestehen aus einer Vielzahl von Segmentblechen 2. Diese sind elektrisch gegeneinander durch Oxid- oder Lackschichten isoliert und besitzen nicht näher dargestellte Nuten zur Aufnahme von Wicklungen. Je nach Leistungsgröße der elektrischen Maschine 1 weist das Blechpaket 6 zwischen 10.000 bis 150.000 Segmentbleche 2 auf. Üblicherweise werden solche elektrodynamischen Maschinen 1 derart aufgebaut, dass zwischen zwei Druckplatten 7, 8 die Segmentbleche 2 bzw. das Blechpaket 6 mittels so genannter Zuganker 9 zusammengedrückt werden. Der Zuganker 9 ist üblicherweise als eine Stahlgewindestange ausgebildet.

Die Segmentbleche 2 bestehen aus einem Material, dass sich durch hohe Magnetisierbarkeit und möglichst geringe magnetische Hysterese- und Wirbelstromverluste auszeichnet. Üblicherweise weisen die Blechpakte 6 eine Blechlage, in Umfangsrichtung 4 gesehen, bestehend aus fünf bis zehn Segmentblechen 2, auf.

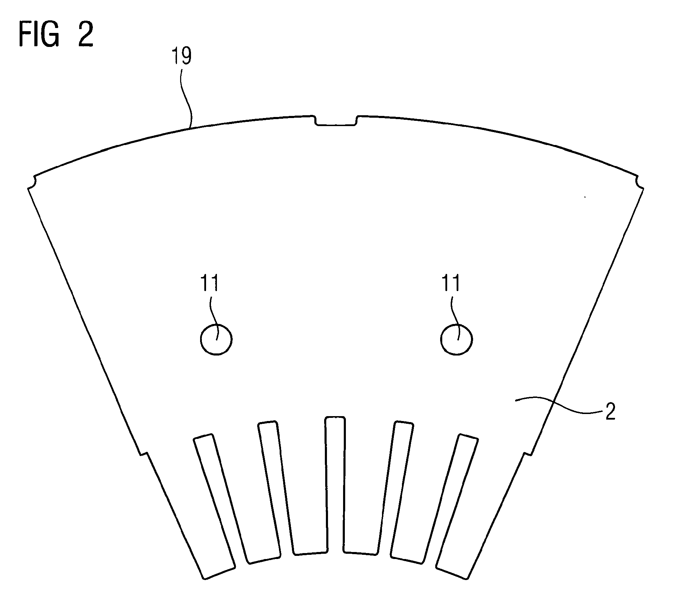

In der FIG 2 ist ein einzelnes Segmentblech 2 dargestellt. Das Segmentblech 2 kann Bohrungen 11 aufweisen. In dem in FIG 2 dargestellten Segmentblech 2 sind lediglich zwei Bohrungen 11 dargestellt. Es können aber auch mehrere Bohrungen 11 pro Segmentblech enthalten sein.

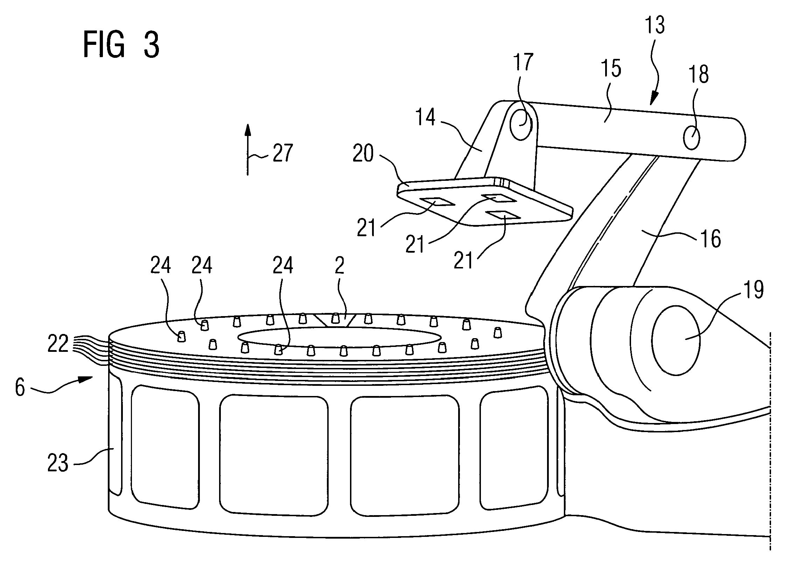

In der FIG 3 ist eine Positioniereinrichtung 12 und eine Greifvorrichtung 13 dargestellt. Die Greifvorrichtung 13 umfasst einen ersten Trägerarm 14, einen zweiten Trägerarm 15 und einen dritten Trägerarm 16. Solche Trägerarmeinrichtungen sind im Stand der Technik bekannt und erlauben eine Bewegung in allen drei Richtungen eines kartesischen Koordinatensystems. Diese Bewegung wird beispielsweise durch Gelenke 17, 18, 19 ermöglicht. Die für die Bewegung der Trägerarme 14, 15, 16 nötigen Gelenke sind der Übersichtlichkeit wegen nicht dargestellt. Die Bewegung der Trägerarme 14, 15, 16 wird durch ein programmiergesteuertes Steuerungssystem realisiert. Dieses Steuerungssystem ist in der FIG 3 ebenfalls nicht dargestellt. Die Steuerung kann durch so genannte speicherprogrammierbare Steuerungen (SPS) realisiert werden. Am Ende des Trägerarmes 14 befindet sich eine Greifplatte 20, an der drei Magnetköpfe 21 angeordnet sind. Es können aber auch lediglich ein Magnetkopf 21 oder zwei oder mehr als drei Magnetköpfe angeordnet werden.

Die Magnetköpfe 21 erzeugen ein magnetisches Feld, das zu magnetischen Kräften führt, die auf ein Segmentblech 2 wirken. Dadurch entsteht eine Verbindung zwischen der Greifvorrichtung 13 und einem Segmentblech 2, das kraftschlüssig mittels magnetischer Kräfte realisiert wird. Die Magnetköpfe 21 sind hierbei derart angeordnet, dass ihre Kraftfelder mit Rückenteilen der Segmentbleche 2 direkt kontaktieren und Haltekräfte zwischen den Trennflächen der vorbestimmten Anzahl zu bewegenden Segmentbleche 2 aufbauen.

In der FIG 3 ist ein noch anzufertigendes Blechpaket 6 dargestellt. In der FIG 3 weist das Blechpaket 6 Blechlagen 22 auf, die auf einem Positioniertisch 23 liegen. Die Blechlagen 22 umfassen jeweils mehrere Segmentbleche 2, wobei in FIG 3 lediglich eins näher dargestellt ist. Aus den Segmentblechen 2 ragen Stifte 24 durch die vorhandenen Bohrungen 11 hervor. Der Übersichtlichkeit wegen sind in der FIG 3 lediglich drei Stifte mit dem Bezugszeichen 24 versehen.

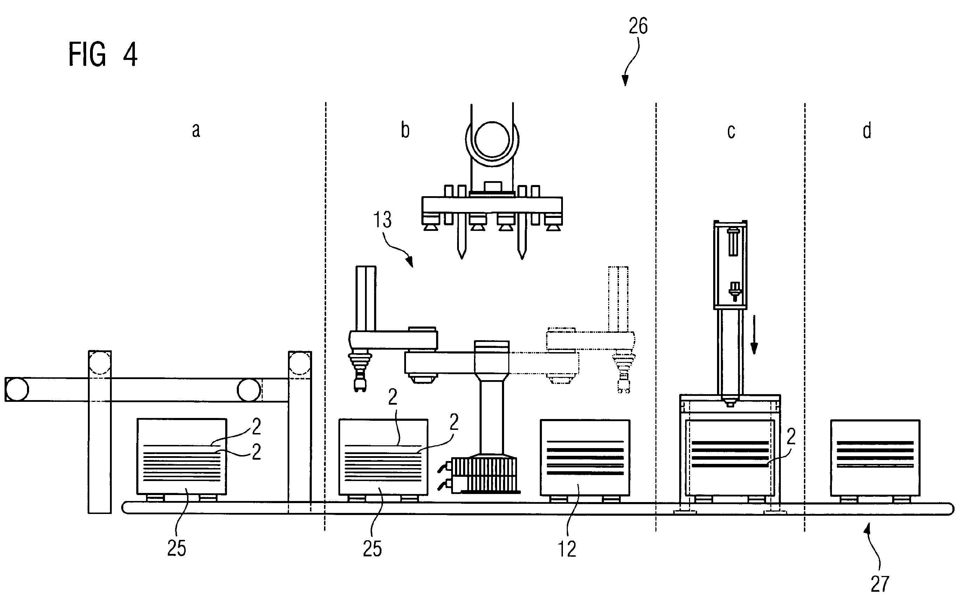

In der FIG 4 ist eine schematische Darstellung eines Verfahrens zur Herstellung eines Blechpaketes dargestellt. In einem ersten Schritt liegen in einem Vorratsbehälter 25 mehrere Segmentbleche 2 gestapelt übereinander. In einem nächsten Verfahrensschritt wird der Vorratsbehälter 25 in die Nähe der Automatisierungsvorrichtung 26 gebracht.

Die Greifvorrichtung 13 wird an das oberste Segmentblech 2 im Vorratsbehälter 25 geführt. In einem nächsten Schritt, der in der FIG 4 nicht näher dargestellt ist, wird die Greifvorrichtung an das oberste Segmentblech kontaktiert, wobei die Greifvorrichtung 13 derart ausgebildet wird, dass das oberste Segmentblech 2 und zumindest ein unter dem obersten Segmentblech 2 liegendes zweites Segmentblech 2 durch Kraftwirkung infolge magnetischer Felder bewegt werden kann. In einem nächsten Verfahrensschritt werden das oberste und das zweite Segmentblech 2 gemeinsam und gleichzeitig gehoben und auf einer Positioniereinrichtung 12 abgelegt. Anschließend wird die Greifvorrichtung 13 wieder zum Vorratsbehälter 25 geführt und die vorgenannten Verfahrensschritte anschließend wiederholt, bis ein Blechpaket 6 in geeigneter Größe entstanden ist.

Mit einer Spreizeinrichtung kann zudem ein bzw. zwei Segmentbleche 2 gleichzeitig angehoben werden, so dass die Greifvorrichtung 13 leichter mit zwei Segmentblechen 2 in Kontakt gebracht werden kann.

Die Greifvorrichtung 13 kann in einer alternativen Ausführungsform derart ausgebildet sein, dass drei Segmentbleche 2 gemeinsam gehoben und bewegt werden können.

In einer weiteren alternativen Ausführungsform kann die Greifvorrichtung 13 derart ausgebildet werden, dass mehr als drei Segmentbleche 2 gemeinsam gehoben und bewegt werden können. In FIG 3 ist deutlich dargestellt, wie die Greifvorrichtung 13 ein Segmentblech 2 auf den Positioniertisch 23 ablegen kann. Das Segmentblech 2 wird hierbei derart über dem Positioniertisch 23 abgelegt, dass die Bohrungen 11 in die Stifte 24 hineinragen.

Sobald ein weiteres Segmentblech 2 auf den Positioniertisch 23 in die entsprechende Bohrung 24 abgelegt wird, wächst das Blechpaket 6 in einer Richtung 27 an. In einer alternativen Ausführungsform wird die Positioniereinrichtung 12 derart ausgebildet, dass die Stifte 24 in dieser Richtung 27 bewegbar sind. Sobald eine weitere Blechlage 6 aus verschiedenen Segmentblechen 2 auf dem Positioniertisch 23 abgelegt wurde, sollten die Stifte 24 um die entsprechende Dicke der Blechlage 6 bewegt werden.

Die Enden der Stifte 24 können hierbei zylinderförmig sein. In einer alternativen Ausführungsform können die Enden der Stifte konusförmig ausgebildet sein.

Das Verfahren zur Herstellung des Blechpaketes 6 kann vereinfacht werden, indem ein weiterer Verfahrensschritt berücksichtigt wird. Die Automatisierungsvorrichtung 26 kann derart ausgebildet werden, dass die Greifvorrichtung 13 zunächst das oberste Segmentblech 2 bewegt und wieder auf das darunter liegende Segmentblech 2 passgenau ablegt.

Erst in einem nächsten Verfahrensschritt wird dann das obere und das untere Segmentblech 2 gemeinsam bewegt. Die Greifvorrichtung 13 umfasst zumindest drei Magnetköpfe 21 zum Kontaktieren der Segmentbleche 2 auf. Das durch die Magnetköpfe 21 erzeugte magnetische Feld, das zu einer Kraftwirkung führt, ist zu- und abschaltbar. Die Automatisierungsvorrichtung 26 ist mit kommunizierenden Steuerungen derart miteinander verbunden, dass die einzelnen Verfahrensschritte selbständig und automatisiert ablaufen. Die Automatisierungsvorrichtung 26 kann derart eingestellt werden, dass wahlweise eins, zwei, drei oder vier Segmentbleche zugleich angehoben, transportiert und abgelegt werden können.

Die Automatisierungsvorrichtung 26 sollte Steuerungs- und Kontrollelemente zur Einhaltung von technischen Bedingungen umfassen.

Bei Bedarf können Spreizmagnete am Vorratsbehälter 25 derart angeordnet werden, dass ihre Kraftfelder das Kontaktieren der Greifvorrichtung 13 von einem bzw. von mehreren Segmentblechen 2 realisiert werden kann.

Geeignete Sensoren, die in den Figuren nicht näher dargestellt sind, können an die Automatisierungsvorrichtung 26 angeordnet werden. Diese Sensoren können derart ausgebildet werden, dass die Position der Greifarme 14, 15 und 16 und die Position der Segmentbleche 2 im Vorratsbehälter 25 jederzeit bestimmt werden können. Somit kann jedes Segmentblech 2 nach jedem Verfahrensschritt passgenau angehoben werden.

Das Verfahren zur Herstellung des Blechpaketes 6 ist beendet, sobald eine vorbestimmte Anzahl an Blechlagen 22 aufgebaut wurde. In einem darauf anschließenden Verfahrensschritt wird dann das komplette Blechpaket in eine Auswurfsposition 28 gebracht.

## Patentansprüche

1. Verfahren zur Herstellung eines Blechpaketes (6) für eine dynamoelektrische Maschine (1),
wobei das Blechpaket (6) Segmentbleche (2) umfasst,
wobei in einem Vorratsbehälter (25) übereinander gestapelte Segmentbleche (2) vorhanden sind,
umfassend folgende Schritte,
a) Führen einer magnetischen Greifvorrichtung an ein oberstes Segmentblech,
b) Kontaktieren des obersten Segmentbleches mit der Greifvorrichtung,
c) Heben des obersten und zumindest eines unter dem obersten Segmentblech liegenden zweiten Segmentbleches durch die magnetische Greifvorrichtung,
d) Ablegen des obersten und des zweiten Segmentbleches auf einer Positioniereinrichtung zum Aufbau eines Blechpaketes.

2. Verfahren nach Anspruch 1,
wobei im Schritt c) zusätzlich ein unter dem zweiten Segmentblech (2) liegendes drittes Segmentblech (2) gehoben wird und in Schritt d) abgelegt wird.

3. Verfahren nach Anspruch 2,
wobei im Schritt c) zumindest ein zusätzliches Segmentblech (2) gehoben und im Schritt d) abgelegt wird.

4. Verfahren nach Anspruch 1, 2 oder 3,
bei dem Segmentbleche (2) mit zumindest einer Bohrung (11) versehen und die Positioniereinrichtung (12) zumindest einen Stift (24) aufweist,
wobei das oberste und zweite Segmentblech (2) derart auf die Positioniereinrichtung (12) abgelegt werden, dass der Stift (24) in die Bohrung (11) hineinragt und die Segmentbleche 2 entlang des Stifts 24 geführt werden.

5. Verfahren nach Anspruch 4,
bei dem der Stift (24), sobald das oberste und das zumindest zweite Segmentblech (2) abgelegt wurden, in Richtung des wachsenden Blechpaketes (6) bewegt wird.

6. Verfahren nach einem der vorhergehenden Ansprüche,
bei dem zunächst das oberste Segmentblech (2) angehoben wird, auf das untere zumindest zweite Segmentblech (2) passgenau abgelegt wird und in einem nächsten Schritt das oberste und das zumindest untere zweite Segmentblech (2) gleichzeitig bewegt werden.

7. Automatisierungsvorrichtung (26) zur Herstellung eines Blechpaketes (6) für eine dynamoelektrische Maschine (1),
wobei in einem Vorratsbehälter (25) übereinander gestapelte Segmentbleche (2) vorhanden sind,
wobei die Automatisierungsvorrichtung (26) eine Greifvorrichtung (13) umfasst, die derart ausgebildet ist, dass ein oberstes und zumindest ein unter dem obersten Segmentblech (2) liegendes zweites Segmentblech (2) gleichzeitig bewegbar und auf einer Positioniereinrichtung (12) ablegbar ist,
**dadurch gekennzeichnet, dass**
die Greifvorrichtung (13) derart ausgebildet ist, dass das oberste und das zumindest unter dem obersten liegende zweite Segmentblech (2) durch eine Kraftwirkung mittels magnetischer Felder gleichzeitig bewegbar sind.

8. Automatisierungsvorrichtung (26) nach Anspruch 7,
wobei drei oder mehr Segmentbleche (2) durch die Greifvorrichtung (13) bewegbar sind.

9. Automatisierungsvorrichtung (26) nach Anspruch 7 oder 8,
wobei das magnetische Feld zu- und abschaltbar ist.

10. Automatisierungsvorrichtung (26) nach Anspruch 7, 8 oder 9,
wobei die Greifvorrichtung (13) zumindest drei Magnetköpfe (24) zum Kontaktieren der Segmentbleche (2) aufweist.

11. Automatisierungsvorrichtung (26) nach einem der Ansprüche 7 bis 10,
wobei die Segmentbleche (2) zumindest eine Bohrung (11) und die Positioniereinrichtung (12) zumindest einen Stift (24) aufweisen,
wobei die mit der Greifvorrichtung (13) angehobenen Segmentbleche (2) derart auf die Positioniereinrichtung (12) ablegbar sind, dass der Stift (24) in die Bohrung (11) hineinragt.

12. Automatisierungsvorrichtung (26) nach Anspruch 11,
wobei der Stift (24) ein konisch ausgebildetes Ende aufweist.

13. Automatisierungsvorrichtung (26) nach Anspruch 11 oder 12,
wobei die Positioniereinrichtung (12) derart ausgebildet ist, dass der Stift (24) beweglich ist.

14. Automatisierungsvorrichtung (26) nach einem der Ansprüche 7 bis 13,
bei der Sensoren angeordnet sind, die derart ausgebildet sind, dass die Position der Greifvorrichtung (13) und die Lage der Segmentbleche (2) erfassbar sind.
